# EUROPÄISCHE PATENTSCHRIFT

(11) **EP 2 886 682 B1**
(45) Veröffentlichungstag und Bekanntmachung des Hinweises auf die Patenterteilung: **18.05.2016**
(21) Anmeldenummer: 14200264.1
(22) Anmeldetag: 23.12.2014
(51) Int. Cl.: C25C 7/08, B29C 65/08

(54) **Kathodenblech und Verfahren zur Ausbildung eines Ansatzbereichs für eine Schälvorrichtung an einem Kathodenblech**
Cathode plate and method for forming an onset area for a peeling device on a cathode plate
Tôle cathodique et procédé de configuration d'une zone d'amorce d'un dispositif d'épluchage à une tôle cathodique

(30) Priorität: 23.12.2013 EP 13199301
(43) Veröffentlichungstag der Anmeldung: 24.06.2015
(73) Patentinhaber: AMAG rolling GmbH, 5282 Braunau am Inn-Ranshofen (AT)
(72) Erfinder: Schmidt, Markus, 5120 Haigermoos (AT); Jerk, Marcus, 5222 Munderfing (AT)
(74) Vertreter: Jell, Friedrich

(56) Entgegenhaltungen:
- EP-A1- 0 199 493
- EP-A1- 0 634 503
- DE-A1- 3 027 008
- DE-C2- 3 051 150
- DE-T2- 69 316 582

## Beschreibung

Die Erfindung betrifft ein Kathodenblech und ein Verfahren zur Ausbildung eines Ansatzbereichs für eine Schälvorrichtung an einem Kathodenblech, bei dem in das Kathodenblech auf dessen beiden Flachseiten gegenüberliegende Vertiefungen und mehrere die beiden Vertiefungen verbindende Öffnungen eingebracht werden, diese Vertiefungen mit je einem Kunststoffteil versehen werden, wobei in die Öffnungen je mindestens ein Steg mindestens eines der Kunststoffteile einragt, und diese Kunststoffteile stoffschlüssig zu einem den Ansatzbereich ausbildenden Einsatz verbunden werden.

Aus dem Stand der Technik sind für Kathodenbleche Einsätze aus Kunststoffteilen bekannt, an denen Schälvorrichtungen zum Abstreifen von Abscheidungen am Kathodenblech ansetzen. Zur Verankerung der Einsätze sind die Kunststoffteile in je einer Vertiefung an den Flachseiten des Kathodenblechs vorgesehen und durchgreifen mit Stegen mehrere Öffnungen, die dadurch die beiden Vertiefungen verbinden. Ein mehrteiliger Einsatz birgt jedoch das Risiko eines mechanischen Versagens an seinen Verbindungsstellen, insbesondere wenn vergleichsweise hohe mechanische Belastungen beim Ansetzen eines Messers der Schälvorrichtung aufzunehmen sind. Selbst ein bekanntes Verkleben der Kunststoffeinsätze lässt keine Verbesserung in der mechanischen Belastbarkeit erkennen, weil bekannte Klebstoffe den Bedingungen der Elektrolyse meist nicht standhalten.

Alternativ zu Kunststoffteilen mit Stegen offenbart die EP0634501 A1 in einer seitlichen Ausnehmung am Kathodenblech mit beidseitig angefasten Rändern, zwei im Wesentlichen scheibenförmige Kunststoffteile einzusetzen und miteinander stoffschlüssig zu verbinden. Dieses kann auch mithilfe eines Heizelementschweißens erfolgen. Nachteilig erfordert dieses Verfahren ein breitflächiges Erwärmen der Kunststoffteile, was einen Verzug und/oder Restspannungen am Kunststoffteil nicht ausschließen kann - insbesondere unter Berücksichtigung einer beschleunigten Abkühlung durch erhöhte Wärmeabfuhr des Kathodenblechs im Bereich der randseitigen Fügefläche. Mit einer verminderten Standefestigkeit des Kathodenblechs bzw. verringerter Reproduzierbarkeit des Verfahrens ist zu rechnen.

Neben einer mehrteiligen Ausführung solche eines Einsatzes ist es auch bekannt (DE3051150C2, DE69316582T2), einen Einsatz einstückig mithilfe eines Gießverfahrens am Kathodenblech vorzusehen. Nachteilig müssen hierzu - der Gießbarkeit wegen - meist vergleichsweise weiche Kunststoffe verwendet werden, was der mechanischen Belastbarkeit nicht förderlich ist. Den aus dem Stand der Technik bekannten Ausführungsformen mangelt es daher an Standfestigkeit, was die Anzahl an Verwendungszyklen des Kathodenblechs erheblich reduzieren kann.

Der Erfindung liegt somit die Aufgabe zugrunde, ausgehend vom eingangs geschilderten Stand der Technik, ein Verfahren zur Ausbildung eines Ansatzbereichs an einem Kathodenblech zu schaffen, das reproduzierbar ein standfestes Kathodenblech gewährleisten kann.

Die Erfindung löst die gestellte Aufgabe hinsichtlich des Verfahrens dadurch, dass die aus demselben Werkstoff bestehenden Kunststoffteile im jeweiligen Stoß des einen Kunststoffteils mit dessen Steg des anderen Kunststoffteils zu einem einstückigen Einsatz ultraschallverschweißt werden.

Werden die aus demselben Werkstoff bestehenden Kunststoffteile im jeweiligen Stoß des einen Kunststoffteils mit dessen Steg des anderen Kunststoffteils zu einem einstückigen Einsatz ultraschallverschweißt, kann sich eine mechanisch, chemisch oder thermisch besonders hoch belastbare formschlüssige Verbindung zwischen Kathodenblech und Einsatz ausbilden. Ultraschallverschweißen bedarf nämlich keines Schweißzusatzwerkstoffs und führt somit zu keinen Schwachstellen an der Fügeverbindung zwischen den Kunststoffteilen. Dabei können sich insbesondere flüssigkeitsdichte Schweißverbindungen ausbilden. Der Einsatz kann demnach selbst den extremen chemischen und/oder thermischen Bedingungen während der Elektrolyse trotzen, ohne dass eine Schwächung seiner formschlüssigen Verbindung befürchtet werden muss. Des Weiteren kann der spielfreie Einsatz seine Position am Kathodenblech stets halten und damit standfest den mechanischen Beanspruchungen beim Abschälvorgang widerstehen. Auch kann im Gegensatz zu einem bekannten Thermoschweißverfahren ein Ultraschallverschweißen unempfindlicher gegenüber einer bereichsweise erhöhten Kühlung durch das Kathodenblech sein - was Restspannungen im und Verzug am Einsatz vermeiden und die Reproduzierbarkeit des Verfahrens deutlich erhöhen kann. Dies kann selbst dann erreicht werden, wenn mehrere Stege das Kathodenblech durchgreifen, um eine besonders gute Verankerung des Einsatzes im Kathodenblech auszubilden - ohne dabei aber eine wesentliche mechanische Schwächung des Kathodenblechs in diesem Bereich in Kauf nehmen zu müssen. Zudem kann Ultraschallverschweißen auch eine Verwendung von Werkstoffen erlauben, die durch ein Gießverfahren nicht mehr verarbeitbar wären - somit sind vom erfindungsgemäßen Verfahren gegenüber einer Elektrolyse beständigere Werkstoffe verarbeitbar. Es ist also möglich, besonders widerstandsfähige und standfeste Kathodenbleche reproduzierbar zu erzeugen.

Im Allgemeinen kann auch vorteilhaft sein, wenn zwischen Kathodenblech und Kunststoffteilen ein seitliches Spiel besteht. Eventuell kann dadurch eine Erleichterung des Ultraschallverschweißen erreicht werden.

Ragen in eine Öffnung mindestens zwei Stege ein, die mit dem jeweils anderen Kunststoffteil ultraschallverschweißt werden, kann sich die Fügeverbindung zwischen den Kunststoffteilen verfahrenstechnisch einfacher ergeben. Durch diese Materialaufschmelzungen können auch Effekte in der Verbesserung der Stoffverbindung genutzt werden, um die Standfestigkeit des Einsatzes zu erhöhen - und dies zudem bei vergleichsweise geringem Zeitbedarf.

Im Allgemeinen wird festgehalten, dass die Stege des Kunststoffteils die Öffnungen im Kathodenblech nicht ausfüllen müssen. Es ist demnach vorstellbar, dass die Kunststoffteile nach dem Ultraschallverschweißen ungefüllte Zwischenräume einschließen und dadurch innenliegende Rippen ausbilden. Dies kann sich als vorteilhaft herausstellen, da hierbei ohne nachteilige Effekte auf Festigkeit und Stabilität deutlich Kunststoff-Material eingespart werden kann. Hierbei zeichnet sich die Verwendung des Ultraschallverschweißens der Kunststoffteile besonders aus, da die Herstellung solcher innenliegender Rippen durch herkömmliche Thermoschweiß- oder Gießverfahren nicht möglich ist. Dadurch kann das Herstellungsverfahren kostengünstiger gestaltet werden.

Die Montage der beider Kunststoffteile kann weiter erleichtert werden, wenn die beiden Kunststoffteile über ihre Stege in der Vertiefung positioniert werden. Zudem kann auf diese Weise die Gefahr eines gegenseitigen Verrutschens und/oder Verdrehens der Kunststoffteile während des Ultraschallverschweißens verringert werden. Eine hohe Reproduzierbarkeit des Verfahrens kann damit sichergestellt werden, um einstückige Einsätze konstant hoher Qualität zu erhalten.

Die Formgenauigkeit des Einsatzes kann erhöht werden, wenn beim Ultraschallverschweißen mindestens ein Schweißgrat zwischen die Stege gedrängt wird. Zudem kann damit der Schweißgrat gegenüber chemischen und mechanischen Belastungen geschützt werden, was die Standfestigkeit des Kathodenblechs weiter erhöhen kann.

Die Handhabung des Verfahrens kann sich weiter erleichtern, wenn in die Vertiefung scheibenförmige Kunststoffteile eingesetzt werden, die gegebenenfalls durch Vorsprünge Stege ausbildet. Besonders aber kann damit eine breite Ansatzfläche für die Sonotrode geschaffen und damit das Ultraschallverschweißen erleichtert werden.

Das Verfahren - insbesondere hinsichtlich seines stoffschlüssigen Fügens - kann erleichtert werden, wenn von einem der beiden Kunststoffteile die Stege ausgebildet werden. Insbesondere die Verfahrensparameter der Sonotrode können damit genauer auf die Schweißnaht ausgelegt werden, was die Festigkeit an der Schweißstelle und damit die Reproduzierbarkeit des Verfahrens erhöhen kann.

Sind die Vertiefungen vom Kathodenblech umfasst, kann beim Ultraschallverschweißen ein Luftabschluss im Fügebereich genutzt werden, einen oxidativen Abbau kritischer Kunststoffe zu vermeiden. Dies ermöglicht insbesondere auch ein sicheres Ultraschallverschweißen von teilkristallinen Thermoplasten. Werden kreisförmige Vertiefungen eingebracht, kann ein kontinuierliches Übergleiten der Schälvorrichtung vom Einsatz auf das Kathodenblech ermöglicht werden. Dies erleichtert nicht nur das Abschälen, auch sprunghafte Kraftänderungen auf den Einsatz können so vermieden werden, was in weiterer Folge zu einer längeren Lebensdauer und höheren Standfestigkeit des Kathodenblechs führen kann.

Wird mindestens ein Steg eines Kunststoffteils sich endseitig, insbesondere kegelförmig, verjüngend ausgeführt, kann damit am Steg ein Energierichtungsleiter zur Ausbildung einer Stumpfnaht versehen werden. Dies kann das Ultraschallverschweißen erheblich erleichtern, weil damit auch in der Anfangsphase des Ultraschallverschweißens Kontakt mit einer kalten Oberfläche des Kathodenblechs vermeidbar wird. Außerdem kann damit die Plastifizierung während des Ultraverschweißens besonders gleichmäßig erfolgen, wodurch eine dementsprechend standfeste Fügeverbindung der beiden Kunststoffteile erreicht werden kann. Unter anderem kann auf diese Weise reproduzierbar eine feste stoffschlüssige Verbindung geschaffen werden.

Ein besonders standfestes Kathodenblech kann hergestellt werden, wenn die Kunststoffteile im Nahfeld unter Herstellung einer Stumpfnaht ultraschallverschweißt werden.

Werden Kunststoffteile aus einem thermoplastischen Kunststoff, insbesondere teilkristallinen Thermoplast, ultraschallverschweißt, kann dies zu vergleichsweise hoher mechanischer, chemischer oder thermischer Belastbarkeit führen. Insbesondere kann sich hierbei Polypropylen als Material für die Kunststoffteile auszeichnen, um auch die Reproduzierbarkeit des Verfahrens zu erhöhen.

Es ist weiter die Aufgabe der Erfindung, ein Kathodenblech mit einem Ansatzbereich der geschilderten Art in seiner Standfestigkeit zu verbessern.

Die Erfindung löst die gestellte Aufgabe hinsichtlich des Kathodenblechs dadurch, dass die aus demselben Werkstoff bestehenden und ultraschallverschweißten Kunststoffteile einen einstückigen Einsatz mit Schweißnähten zwischen dem jeweiligen Stoß des einen Kunststoffteils mit dessen Steg des anderen Kunststoffteils ausbilden.

Bilden die die aus demselben Werkstoff bestehenden und ultraschallverschweißten Kunststoffteile einen einstückigen Einsatz mit Schweißnähten zwischen dem jeweiligen Stoß des einen Kunststoffteils mit dessen Steg des anderen Kunststoffteils aus, kann dieser Einsatz besonders standfest im Kathodenblech verankert sein. Eine stoffschlüssige Verbindung, hergestellt durch das Ultraschallverschweißen, erfordert nämlich keinen Schweißzusatzwerkstoff und führt somit keine zusätzlichen Materialen an der Fügestelle ein. Somit können sich keine zusätzlichen Angriffspunkte - und in weiter Folge Schwachpunkte - für die vergleichsweise aggressiven Bedingungen der Elektrolyse ergeben, welche etwa zu Korrosion und damit einer Schwächung des Fügeverbunds führen könnten. Zudem können mehrere gefügte Stege mit einer Schweißnaht Restspannungen im und Verzug am Einsatz gering halten. Da zudem der einstückige Einsatz mit Stegen durch mehrere Öffnungen im Kathodenblech ragt, kann dieser Einsatz auch den mechanischen Beanspruchungen durch den Abschälvorgang verbessert widerstehen. Außerdem damit kann die Kraftübertragung auf das Kathodenblech günstiger verteilt werden, was die Standfestigkeit des Kathodenblechs weiter erhöhen kann. Ein standfestes Kathodenblech kann so geschaffen werden.

Durchragt ein Kunststoffteil mit mehreren Stegen eine Öffnung des Kathodenblechs, wobei die Stege an den Randbereich der Öffnung anschließen und zwischen sich mindestens einen Schweißgrat aufweisen, kann die Standfestigkeit des Kathodenblechs erhöht werden. Insbesondere der Schweißgrat zwischen den Stegen kann für eine weitere mechanische Versteifung der Stege und für eine breitere Schweißnaht sogen.

Bestehen die Kunststoffteile aus einem thermoplastischen Kunststoff, kann dies zu vergleichsweise hoher mechanischer, chemischer oder thermischer Belastbarkeit führen. Insbesondere kann sich hierbei teilkristallines Thermoplast, vorzugsweise Polypropylen, als Material für die Kunststoffteile auszeichnen.

Konstruktive Einfachheit am Kathodenblech kann ermöglicht werden, wenn einer der beiden Kunststoffteile die Stege aufweist.

Im Allgemeinen wird erwähnt, dass die Schweißnaht besonders gut geschützt werden kann, wenn die Vertiefungen vom Kathodenblech umfasst, insbesondere kreisförmigen ausgebildet, sind. Damit kann außerdem ein kreisförmiger Ansatzbereich ausgebildet werden, mit dem ein kontinuierlicher Übergang der Schälvorrichtung vom Einsatz auf das Kathodenblech ermöglicht werden kann. Im Allgemeinen wird erwähnt, dass die Einsätze auch einen beliebigen anderen, von der kreisförmigen Form abweichenden Ansatzbereich ausbilden können. Unter anderem sind ebenso ovale, halbrunde und mehreckige Ansatzbereiche vorstellbar.

In den Figuren ist beispielsweise der Erfindungsgegenstand anhand mehrere Ausführungsbeispiele näher dargestellt. Es zeigen
- Fig. 1: eine abgerissene Vorderansicht eines Kathodenblechs mit kreisrunden Einsätzen,
- Fig. 2: einen vergrößerten Ausschnitt rund um den Ansatzbereich des Kathodenblechs,
- Fig. 3: eine Schnittansicht gemäß Fig. 2 ohne Kunststoffteile nach einem ersten Ausführungsbeispiel,
- Fig. 4: eine Schnittansicht gemäß Fig. 2 vor dem Ultraschallverschweißen,
- Fig. 5: eine Schnittansicht gemäß Fig. 2 nach dem Ultraschallverschweißen,

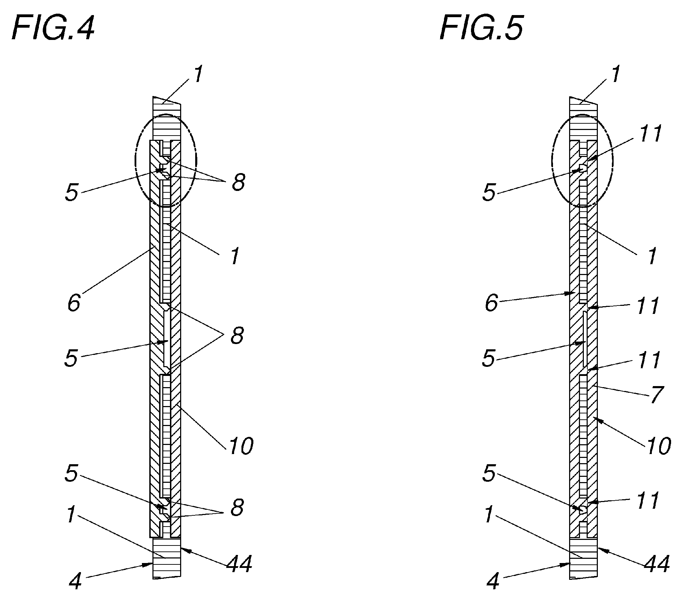

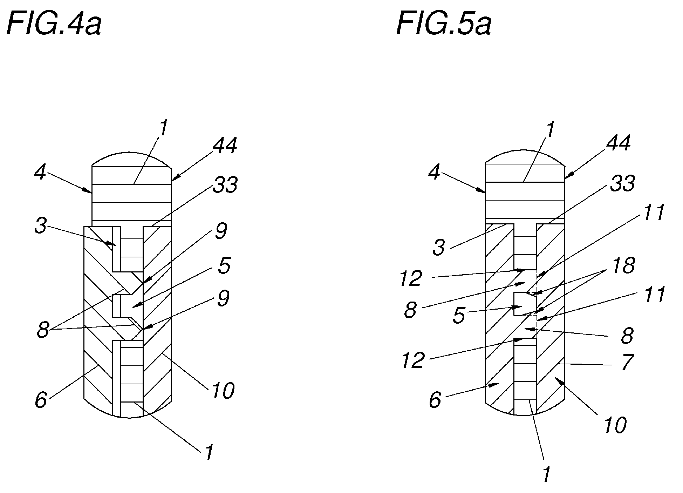

- Fig. 4a: den vergrößerten Ausschnitt der Fig. 4 vor dem Ultraschallverschweißen,
- Fig. 5a: den vergrößerten Ausschnitt der Fig. 5 nach dem Ultraschallverschweißen,

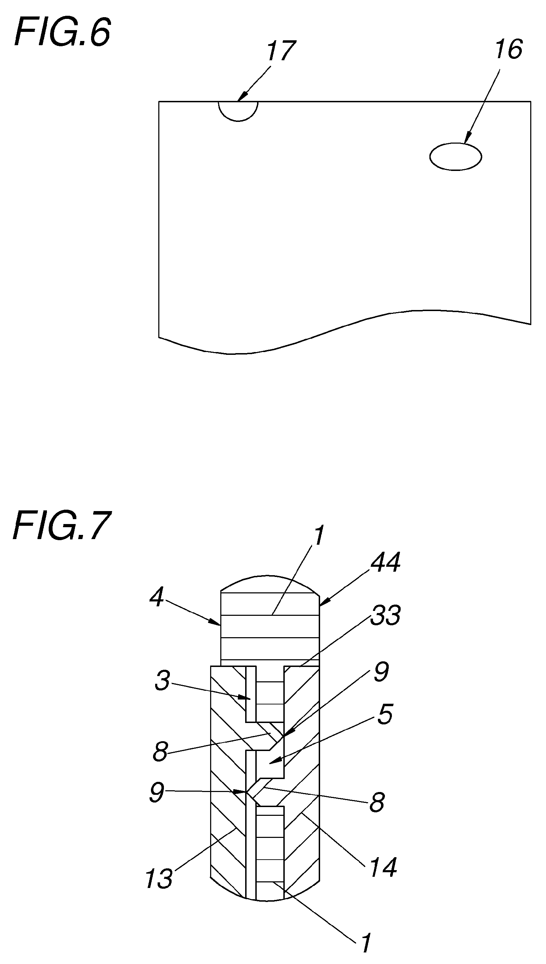

- Fig. 6: eine Vorderansicht eines Kathodenblechs mit halbrunden und ovalen Einsätzen und
- Fig. 7: einen vergrößerten Ausschnitt der Schnittansicht eines anderen Ausführungsbeispiels der Kunststoffteile vor dem Ultraschallverschweißen.

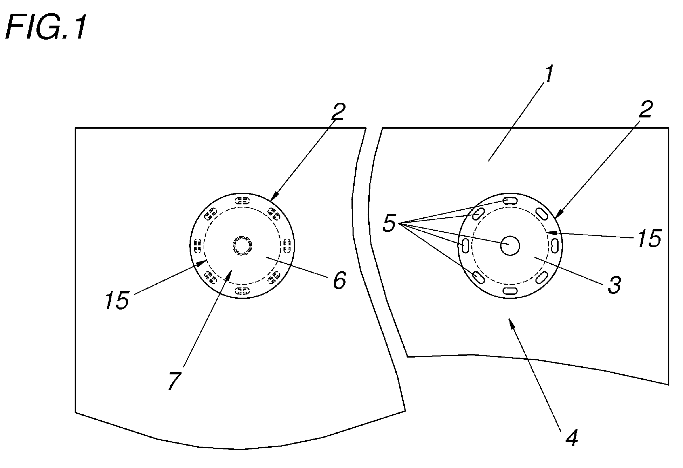

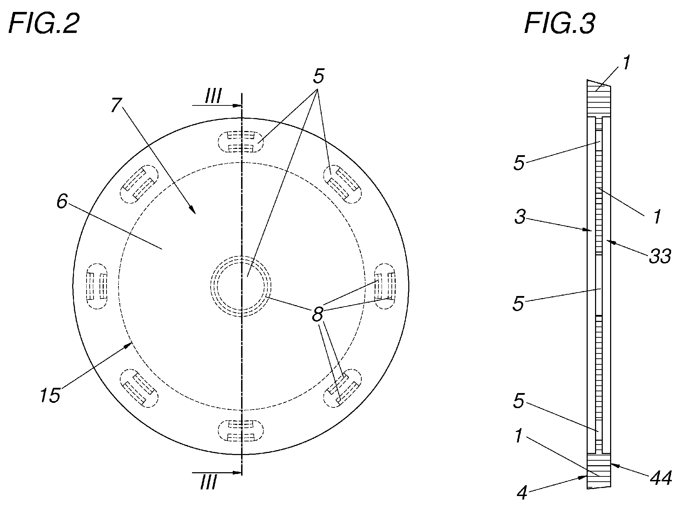

Gemäß Fig. 1 wird beispielsweise ein Kathodenblech 1 zur elektrolytischen Abscheidung von Metallen dargestellt. Dieses beispielhafte Kathodenblech 1 weist zwei Ansatzbereiche 2 für eine nicht näher dargestellte Schälvorrichtung auf. Zur Ausbildung der Ansatzbereiche 2 sind kreisförmige bzw. zylindrische Vertiefungen 3, 33 im Kathodenblech 1 im oberen Bereich beider Flachseiten 4, 44 angeordnet. Die gegenüberliegend angeordneten Vertiefungen 3, 33 sind über mehrere das Kathodenblech 1 durchdringende Öffnungen 5 verbunden - wodurch die in die Vertiefungen 3, 33 eingebrachten scheibenförmigen Kunststoffteile 6, 10 zu einem einstückigen Einsatz 7 im Kathodenblech 1 verbunden werden können. Zur klareren Darstellung der Vertiefungen 3, 33 und der Öffnungen 5 sind in der Darstellung des Kathodenblechs 1 der Fig. 1 im rechten Ansatzbereich 2 noch keine Kunststoffteile 6, 10 eingebracht. Diese Merkmale des Kathodenblechs 1 sind zudem in der Figur 3 zu erkennen.

Wie in dem vergrößerten Ausschnitt rund um den Ansatzbereich in Fig. 2 dargestellt, ragen die Stege 8 eines Kunststoffteils 6 je in zugehörige Öffnungen 5 der Vertiefung 3. Diese Stege 8 werden von einem der beiden Kunststoffteile 6, 10, nämlich vom Kunststoffteil 6 durch Vorsprünge ausbildet. An dieses Kunststoffteil 6 wird eine nicht näher dargestellte Sonotrode für das Ultraschallverschweißen angesetzt.

Diese Stege 8 werden im Stoß 9 mit dem gegenüberliegenden anderen Kunststoffteil 10 mithilfe von Ultraschallverschweißen stoffschlüssig miteinander verbunden. Dadurch bildet sich zwischen dem jeweiligen Stoß 9 des einen Kunststoffteils 10 mit dessen Steg 8 des anderen Kunststoffteils 6 Schweißnähte 11 aus, was für eine standfeste unlösbare Verbindung zwischen den Kunststoffteilen 6, 10 sorgen kann.

Dabei kann der Steg 8 zudem zur erleichterten und sicheren Positionierung des Kunststoffteils 6 - auch in der Vertiefung 3, 33 - genutzt werden, wodurch das Verfahren in der Handhabung vereinfacht wird. Dieser Vorteil wird noch zusätzlich verbessert, wenn in eine Öffnung 5 zwei beabstandete Stege 8 einragen - wie dies unter anderem in Figur 2 erkennbar ist. Werden diese mit dem jeweils anderen Kunststoffteil 10 ultraschallverschweißt kann ein besonders standfester Einsatz 7 erreicht werden, weil sich so die Möglichkeit eröffnet, zwischen den Stegen 8 Schweißgrate 18 aufzunehmen.

Selbstverständlich sind auch andere Ausformungen der Stege denkbar, als die dargestellten - ebenso ist vorstellbar, dass mehr als zwei Stege in eine Öffnung einragen.

Zur Verdeutlichung stellt Fig. 4 den Schnitt gemäß Fig. 2 vor dem Ultraschallverschweißen dar. Fig. 4a zeigt den vergrößerten Ausschnitt aus Fig. 4 vor dem Ultraschallverschweißen. Fig. 5 und der vergrößerte Ausschnitt Fig. 5a stellen den Schnitt gemäß Fig. 2 nach dem Ultraschallverschweißen dar. Hier sind die beiden Kunststoffteile 6, 10 stoffschlüssig miteinander verbunden und bilden den einstückigen Einsatz 7 aus. Dieser einstückige Einsatz 7 wird ohne Zugabe von Schweißzusatzwerkstoff oder gar Klebstoff gebildet und bietet somit keine zusätzlichen Angriffspunkte für die widrigen Bedingungen der Elektrolyse - wodurch Korrosion am Einsatz 7 weitgehend vermieden wird. Auch gegenüber einer herkömmlichen Schnappverbindung kann sich der ultraschallgeschweißte Einsatz 7 mit seiner deutlich gesteigerten Festigkeit und Stabilität auszeichnen. Der während des Ultraschallverschweißens plastifizierte und danach erstarrte Kunststoff sorgt im Randbereich 12 der Öffnungen 5 für einen zusätzlich verbesserten Formschluss mit dem Kathodenblech 1, wodurch ein standfester Einsatz 7 geschaffen wird, der den mechanischen Beanspruchungen beim Abschälvorgang erhöht standhält.

Entsprechend den Figuren 1 und 2 ist weiter ersichtlich, dass in der Vertiefung 3 mehrere Öffnungen 5 eingebracht sind, in die Stege 8 der Kunststoffteile 6 einragen. Über mehrere Öffnungen 5 bildet sich eine besonders standfeste Verankerung des Einsatzes 7 im Kathodenblech 1 aus, da die beim Abschälvorgang auftretenden Scherkräfte über eine insgesamt größere Stirnfläche in das Kathodenblech 1 eingeleitet werden. Gerade durch die Anordnung einer zentralen Öffnung samt Öffnungen 5 im äußeren Randbereich 15 der Vertiefung 2 kann sowohl das verbleibende Blech als auch die Öffnungen 5 dementsprechend groß bleiben, um eine standfeste Verbindung zwischen Einsatz 7 und Kathodenblech 1 zu gewährleisten.

In einer anderen Ausführung der Kunststoffteile 13, 14, gemäß Fig. 7 vor dem Ultraschallverschweißen dargestellt, weist jeder der gegenüberliegenden Kunststoffteile 13, 14 Stege 8 auf, die in die Öffnungen 5 zwischen den Vertiefungen 3, 33 ragen. Dadurch wird die stoffschlüssige Verbindung zur Ausbildung des einstückigen Einsatzes 7 nochmals verbessert. Beim Ultraschallverschweißen werden nämlich hauptsächlich die Stege 8 sowie die vom Steg 8 berührte gegenüberliegende Fläche zur Ausbildung der Verbindung aufgeschmolzen. Mit der Verteilung der Stege 8 auf beide Kunststoffteile 13, 14 wird somit eine symmetrische Aufteilung der Verbindungsstellen und damit eine höhere Standfestigkeit der Verbindung erreicht. Zudem werden durch die Aufteilung der Stege 8 beide Kunststoffteile 13, 14 mit Hilfe der in die Öffnungen 5 einragenden Stege 8 positioniert. Ein Verrutschen oder Verdrehen der Kunststoffteile 13, 14 während des Ultraschallverschweißens ist daher nicht mehr möglich, wodurch standfeste Verbindungen mit hoher Reproduzierbarkeit erreicht werden.

In den in den Fig. 4, 5, 4a, 5a und 7 gezeigten Ausführungsbeispielen sind die Kunststoffteile 6, 10 bzw. 13, 14 so ausgeführt, dass nach dem Ultraschallverschweißen die Öffnungen 5 der Vertiefung 3 nicht vollständig mit Kunststoff ausgefüllt sind und die beiden Kunststoffteile 6, 10 ungefüllte Zwischenräume einschließen. Der erstarrte Kunststoff kann demnach entlang den Randbereichen 12 der Öffnungen 5 voneinander beabstandete Rippen ausbilden, welche insbesondere die Stabilität des einstückigen Einsatzes 7 erhöhen und gleichzeitig Kunststoff-Material einsparen können. Ein kostengünstigeres Herstellungsverfahren kann dadurch erreicht werden.

Die in der Fig. 1 gezeigten kreisförmigen Ansatzbereiche 2, die beidseitig in das Kathodenblech 1 eingebracht sind, ermöglichen ein kontinuierliches Übergleiten der Schälvorrichtung vom Einsatz 7 auf das Kathodenblech 1 während des Abschälvorgangs. Dadurch werden schlagartige Kraftänderungen und die damit verbundene Beanspruchung der Verbindung Einsatz 1 zu Kathodenblech 7 vermieden, wodurch die Langlebigkeit des Kathodenblechs 1 mit Ansatzbereich 2 weiter erhöht wird.

Wie in Fig. 6 exemplarisch dargestellt, kann der Ansatzbereich 16, 17 auch von der Kreisform abweichen. So zeigt Fig. 6 einen ovalen 16 und einen halbkreisförmigen Ansatzbereich 17. Im Allgemeinen sind natürlich auch andere Positionierungen und Formen für den Ansatzbereich denkbar.

Aus Fig. 4, 4a und 7 ist entnehmbar, dass sich die Stege 8 der Kunststoffteile 6, 13, 14 endseitig verjüngen. Dies sorgt für eine vorteilhafte, weil gleichmäßige, Ausbildung der stoffschlüssigen Verbindung mithilfe des Ultraschallverschweißens, da die Plastifizierung durch Reibungswärme eintritt. Sind nun die Stege 8 endseitig verjüngt, wird dieser Bereich aufgrund der geringen Masse nahezu gleichzeitig plastifiziert. Somit hat die Fügeverbindung keine Schwachstellen durch ungleichmäßige Plastifizierung - und dementsprechend standfest ist die Verbindung insgesamt. Ähnlich günstige Verhältnisse ergeben sich bei nicht näher dargestellten Stegen, die durch kegelförmig endende Vorsprünge der Kunststoffteile 6, 13,14 ausgebildet sind und damit Energierichtungsgeber (EGR) bilden.

Im Allgemeinen wird erwähnt, dass die Energierichtungsgeber (EGR) auf den Stegen insbesondere von Vorteil, wenn die Kunststoffteile 6, 10, 13, 14 im Nahfeld unter Herstellung einer Stumpfnaht ultraschallverschweißt werden. Sind die Vertiefungen 3, 33 vom Kathodenblech 1 umfasst, entsteht beim Ultraschallverschweißen nahezu ein Luftabschluss im Fügebereich, was einen oxidativen Abbau von teilkristallinen Thermoplasten sicher vermeidet. Damit ist selbst eine Stumpfnaht mit Energierichtungsgeber für Kunststoffteile aus einem teilkristallinen Thermoplaste verwendbar.

Im Allgemeinen wird festgehalten, dass die Kunststoffteile 6, 10, 13, 14 aus beliebigem, ultraschallverschweißbaren Kunststoff bestehen können, dass sich aber besonders Polypropylen zur Ausbildung des einteiligen Einsatzes 7 des Ansatzbereichs 2, 16, 17 ausgezeichnet hat.

## Patentansprüche

1. Verfahren zur Ausbildung eines Ansatzbereichs (2) für eine Schälvorrichtung an einem Kathodenblech (1), bei dem in das Kathodenblech (1) auf dessen beiden Flachseiten (4, 44) gegenüberliegende Vertiefungen (3, 33) und mehrere die beiden Vertiefungen (3, 33) verbindende Öffnungen (5) eingebracht werden, diese Vertiefungen (3, 33) mit je einem Kunststoffteil (6, 10, 13, 14) versehen werden, wobei in die Öffnungen (5) je mindestens ein Steg (8) mindestens eines der Kunststoffteile (6, 13, 14) einragt, und diese Kunststoffteile (6, 10, 13, 14) stoffschlüssig zu einem den Ansatzbereich (2) ausbildenden Einsatz (7) verbunden werden, **dadurch gekennzeichnet, dass** die aus demselben Werkstoff bestehenden Kunststoffteile (6, 10, 13, 14) im jeweiligen Stoß (9) des einen Kunststoffteils (10 bzw. 13 oder 14) mit dessen Steg (8) des anderen Kunststoffteils (6 bzw. 14 oder 13) zu einem einstückigen Einsatz (7) ultraschallverschweißt werden.

2. Verfahren nach Anspruch 1, **dadurch gekennzeichnet, dass** in eine Öffnung (5) mindestens zwei Stege (8) einragen, die mit dem jeweils anderen Kunststoffteil (10, 13, 14) ultraschallverschweißt werden.

3. Verfahren nach Anspruch 2, **dadurch gekennzeichnet, dass** die beiden Kunststoffteile (13, 14) über ihre Stege (8) in der Vertiefung (3, 33) positioniert werden.

4. Verfahren nach Anspruch 2 oder 3, **dadurch gekennzeichnet, dass** beim UItraschallverschweißen mindestens ein Schweißgrat (18) zwischen die Stege (8) gedrängt wird.

5. Verfahren nach einem der Ansprüche 1 bis 4, **dadurch gekennzeichnet, dass** in die Vertiefung (3, 33) scheibenförmige Kunststoffteile (6, 10, 13, 14) eingesetzt werden, die gegebenenfalls durch Vorsprünge Stege (8) ausbildet.

6. Verfahren nach einem der Ansprüche 1 bis 5, **dadurch gekennzeichnet, dass** von einem der beiden Kunststoffteile (6, 13, 14) die Stege (8) ausgebildet werden.

7. Verfahren nach einem der Ansprüche 1 bis 6, **dadurch gekennzeichnet, dass** die Vertiefungen (3, 33) vom Kathodenblech (1) umfasst, insbesondere kreisförmig ausgebildet, sind.

8. Verfahren nach einem der Ansprüche 1 bis 7, **dadurch gekennzeichnet, dass** mindestens ein Steg (8) eines Kunststoffteils (6, 13, 14) sich endseitig, insbesondere kegelförmig, verjüngend ausgeführt wird.

9. Verfahren nach einem der Ansprüche 1 bis 8, **dadurch gekennzeichnet, dass** die Kunststoffteile (6, 10, 13, 14) im Nahfeld unter Herstellung einer Stumpfnaht ultraschallverschweißt werden.

10. Verfahren nach einem der Ansprüche 1 bis 9, **dadurch gekennzeichnet, dass** Kunststoffteile (6, 10, 13, 14) aus einem thermoplastischen Kunststoff, insbesondere teilkristallinen Thermoplast, vorzugsweise Polypropylen, ultraschallverschweißt werden.

11. Kathodenblech mit auf beiden Flachseiten (4, 44) gegenüberliegenden Vertiefungen (3, 33), die über mehrere Öffnungen (5) miteinander verbunden sind, und mit einem in diesen Vertiefungen (3, 33) vorgesehenen Einsatz (7), der bündig an die Flachseiten (4, 44) anschließt und mehrere stoffschlüssig miteinander verbundene Kunststoffteile (6, 10, 13, 14) aufweist, wobei in die Öffnungen (5) je mindestens ein Steg (8) mindestens eines der Kunststoffteile (6, 13, 14) einragt, wobei der Einsatz (7) beidseitig am Kathodenblech (1) einen Ansatzbereich (2) für eine Schälvorrichtung ausbildet, **dadurch gekennzeichnet, dass** die aus demselben Werkstoff bestehenden und ultraschallverschweißten Kunststoffteile (6, 10, 13, 14) einen einstückigen Einsatz (7) mit Schweißnähten (11) zwischen dem jeweiligen Stoß (9) des einen Kunststoffteils (10 bzw. 13 oder 14) mit dessen Steg (8) des anderen Kunststoffteils (6 bzw. 14 oder 13) ausbilden.

12. Kathodenblech nach Anspruch 11, **dadurch gekennzeichnet, dass** ein Kunststoffteil (6, 13, 14) mit mehreren Stegen (8) eine Öffnung (5) des Kathodenblechs (1) durchragt, wobei die Stege (8) an den Randbereich (12) der Öffnung (5) anschließen und zwischen sich mindestens einen Schweißgrat (18) aufweisen.

13. Kathodenblech nach Anspruch 11 oder 12, **dadurch gekennzeichnet, dass** die Kunststoffteile (6, 10, 13, 14) aus einem thermoplastischen Kunststoff, insbesondere teilkristallinen Thermoplast, vorzugsweise Polypropylen, bestehen.

14. Kathodenblech nach Anspruch 11, 12 oder 13, **dadurch gekennzeichnet, dass** einer der beiden Kunststoffteile (6, 13, 14) die Stege (8) aufweist.

## Claims

1. A method for forming an attachment area (2) for a peeling apparatus on a cathode plate (1), in which opposite depressions (3, 33) are introduced into the cathode plate (1) on its two flat sides (4, 44) and several openings (5) connecting the two depressions (3, 33), said depressions (3, 33) being provided with one plastic part (6, 10, 13, 14) each, wherein at least one web (8) each of at least one of the plastic parts (6, 13, 14) protrudes into the openings (5), and said plastic parts (6, 10, 13, 14) are materially connected to an insert (7) forming the attachment area (2), **characterized in that** the plastic parts (6, 10, 13, 14) consisting of the same material are ultrasonically welded into an integral insert (7) in the respective joint (9) of the one plastic part (10 and 13 or 14) with its web (8) of the other plastic part (6 and 14 or 13).

2. A method according to claim 1, **characterized in that** at least two webs (8) protrude into an opening (5), said webs (8) being ultrasonically welded with the respective other plastic part (10, 13, 14).

3. A method according to claim 2, **characterized in that** the two plastic parts (13, 14) are positioned via their webs (8) in the depression (3, 33).

4. A method according to claim 2 or 3, **characterized in that** at least one welding burr (18) is pressed between the webs (8) during ultrasonic welding.

5. A method according to one of the claims 1 to 4, **characterized in that** discshaped plastic parts (6, 10, 13, 14) are inserted into the depression (3, 33), said plastic parts optionally forming webs (8) by projections.

6. A method according to one of the claims 1 to 5, **characterized in that** the webs (8) are formed by one of the two plastic parts (6, 13, 14).

7. A method according to one of the claims 1 to 6, **characterized in that** the depressions (3, 33) are encompassed by the cathode plate (1), more particularly formed circularly.

8. A method according to one of the claims 1 to 7, **characterized in that** at least one web (8) of a plastic part (6, 13, 14) is formed in a tapering manner, more particularly conical, at the end side.

9. A method according to one of the claims 1 to 8, **characterized in that** the plastic parts (6, 10, 13, 14) are ultrasonically welded in the near field under production of a butt weld.

10. A method according to one of the claims 1 to 9, **characterized in that** the plastic parts (6, 10, 13, 14) are ultrasonically welded from a thermoplastic material, more particularly a partially crystalline thermoplastic, preferably polypropylene.

11. A cathode plate, comprising depressions (3, 33) which are opposite on the two flat sides (4, 44) and are connected to each other via several openings (5), and comprising an insert (7) which is provided in said depressions (3, 33) and which adjoins the flat sides (4, 44) in a flush manner and comprises several plastic parts (6, 10, 13, 14) which are connected to each other in a materially bonded manner, wherein at least one web (8) each of at least one of the plastic parts (6, 13, 14) protrudes into the openings (5), wherein the insert (7) forms an attachment area (2) for a peeling apparatus on both sides on the cathode plate (1), **characterized in that** the ultrasonically welded plastic parts (6, 10, 13, 14) which consist of the same material form an integral insert (7) with weld seams (11) between the respective joint (9) of the one plastic part (10, 13 or 14) with its web (8) of the other plastic part (6 and 14 or 13).

12. A cathode plate according to claim 11, **characterized in that** a plastic part (6, 13, 14) with several webs (8) protrudes through an opening (5) of the cathode plate (1), wherein the webs (8) adjoin the boundary region (12) of the opening (5) and comprise between themselves at least one weld burr (18).

13. A cathode plate according to caim 11 or 12, **characterized in that** the plastic parts (6, 10, 13, 14) consist of a thermoplastic material, more particularly a partly crystalline thermoplastic, preferably polypropylene.

14. A cathode plate according to claim 11, 12 or 13, **characterized in that** one of the two plastic parts (6, 13, 14) comprises the webs (8).

## Revendications

1. Procédé pour former une zone d'attaque (2) pour un dispositif racleur sur une tôle de cathode (1), dans lequel des creux (3, 33) se faisant face et plusieurs ouvertures (5) reliant les deux creux (3, 33) sont formés dans la tôle de cathode (1) sur les deux faces plates (4, 44) de celle-ci, ces creux (3, 33) sont munis chacun d'une pièce en plastique (6, 10, 13, 14), au moins une barrette (8) d'au moins une des pièces en plastique (6, 13, 14) dépassant dans les ouvertures (5), et ces pièces en plastique (6, 10, 13, 14) sont reliées par solidarité de matière à un insert (7) formant la zone d'attaque (2), **caractérisé en ce que** les pièces en plastique (6, 10, 13, 14) composée du même matériau sont soudées par ultrasons dans l'aboutement (9) respectif d'une pièce en plastique (10 ou 13 ou 14) avec la barrette (8) de l'autre pièce en plastique (6 ou 14 ou 13) pour former un insert d'une pièce (7).

2. Procédé selon la revendication 1, **caractérisé en ce qu'**au moins deux barrettes (8) soudées par ultrasons à l'autre pièce en plastique (10, 13, 14) respective dépassent dans une ouverture (5).

3. Procédé selon la revendication 2, **caractérisé en ce que** les deux pièces en plastique (13, 14) sont positionnées à l'aide de leurs barrettes (8) dans le creux (3, 33).

4. Procédé selon la revendication 2 ou 3, **caractérisé en ce que** lors du soudage par ultrasons, au moins une barbe de soudure (18) est enfoncée entre les barrettes (8).

5. Procédé selon l'une des revendications 1 à 4, **caractérisé en ce que** des pièces en plastique (6, 10, 13, 14) en forme de disques formant, le cas échéant, des barrettes (8) à l'aide de saillies sont insérées dans le creux (3, 33).

6. Procédé selon l'une des revendications 1 à 5, **caractérisé en ce que** les barrettes (8) sont formées par l'une des deux pièces en plastique (6, 13, 14).

7. Procédé selon l'une des revendications 1 à 6, **caractérisé en ce que** les creux (3, 33) sont entourés par la tôle de cathode (1), en particulier de façon circulaire.

8. Procédé selon l'une des revendications 1 à 7, **caractérisé en ce qu'**au moins une barrette (8) d'une pièce en plastique (6, 13, 14) est réalisée en se resserrant à son extrémité, en particulier en forme de cône.

9. Procédé selon l'une des revendications 1 à 8, **caractérisé en ce que** les pièces en plastique (6, 10, 13, 14) sont soudées par ultrasons dans leur zone proche en formant une soudure bout à bout.

10. Procédé selon l'une des revendications 1 à 9, **caractérisé en ce que** des pièces en plastique (6, 10, 13, 14) faites d'une matière thermoplastique, en particulier d'un thermoplastique semi-cristallin, de préférence de polypropylène, sont soudées par ultrasons.

11. Tôle de cathode avec des creux (3, 33) se faisant face sur ses deux faces plates (4, 44) qui sont reliés entre eux par plusieurs ouvertures (5) et avec un insert (7) prévu dans l'un des creux (3, 33), qui se raccorde en affleurement sur les faces plates (4, 44) et comporte plusieurs pièces en plastique (6, 10, 13, 14) reliées entre elles par solidarité de matière, dans laquelle au moins une barrette (8) d'au moins une des pièces en plastique (6, 13, 14) dépasse dans chacune des ouvertures (5), dans laquelle l'insert (7) présente de part et d'autre de la tôle de cathode (1) une zone d'attaque (2) pour un dispositif racleur, **caractérisée en ce que** les pièces en plastique (6, 10, 13, 14) faites du même matériau et soudées par ultrasons forment un insert d'une pièce (7) avec des soudures (11) entre l'aboutement (9) respectif d'une pièce en plastique (10 ou 13 ou 14) et la barrette (8) de l'autre pièce en plastique (6 ou 14 ou 13).

12. Tôle de cathode selon la revendication 11, **caractérisée en ce qu'**une pièce en plastique (6, 13, 14) avec plusieurs barrettes (8) traverse une ouverture (5) de la tôle de cathode (1), les barrettes (8) se raccordant dans la zone de bord (12) de l'ouverture (5) et présentant entre elles au moins une barbe de soudure (18).

13. Tôle de cathode selon la revendication 11 ou 12, **caractérisé en ce que** les pièces en plastique (6, 10, 13, 14) se composent d'une matière thermoplastique, en particulier d'un thermoplastique semi-cristallin, de préférence de polypropylène.

14. Tôle de cathode selon la revendication 11, 12 ou 13, **caractérisée en ce que** l'une des deux pièces en plastique (6, 13, 14) comporte les barrettes (8).
